# EUROPÄISCHE PATENTSCHRIFT

(11) **EP 2 830 957 B1**
(45) Veröffentlichungstag und Bekanntmachung des Hinweises auf die Patenterteilung: **20.04.2016**
(21) Anmeldenummer: 13704604.1
(22) Anmeldetag: 14.02.2013
(51) Int. Cl.: B65B 35/20, B65G 47/53, B65G 47/82, B65B 5/08

(54) **SCHIEBEEINRICHTUNG, TRANSPORTANORDNUNG UND VERPACKUNGSANORDNUNG**
SLIDE DEVICE, TRANSPORT AND PACKAGING ASSEMBLY
DISPOSITIF COULISSANT, ENSEMBLE DE TRANSPORT ET D' EMBALLAGE

(30) Priorität: 29.03.2012 DE 102012205060
(43) Veröffentlichungstag der Anmeldung: 04.02.2015
(73) Patentinhaber: Robert Bosch GmbH, 70442 Stuttgart (DE)
(72) Erfinder: VAN DE LOECHT, Heinrich, 76461 Muggensturm (DE)
(86) Internationale Anmeldenummer: PCT/EP2013/052991
(87) Internationale Veröffentlichungsnummer: WO 2013/143772

(56) Entgegenhaltungen:
- EP-A1- 1 216 938
- EP-A1- 1 992 579
- US-A- 4 250 693
- US-A- 5 079 896

## Beschreibung

### Stand der Technik

Die vorliegende Erfindung betrifft eine Schiebeeinrichtung zum Abschieben von Stückgut von einer Fördereinrichtung und eine Transportanordnung mit einer Fördereinrichtung zum Transport von Stückgut und der Schiebeeinrichtung. Ferner betrifft die Erfindung eine Verpackungsanordnung mit der Transportanordnung und ein Verfahren zum Abschieben von Stückgut von einer Fördereinrichtung.

Bei Verpackungsanordnungen, insbesondere Kartoniermaschinen, werden die Produkte zunächst jeweils von einem Zellenwinkelpaar auf einem Transportsystem aufgenommen und schrittweise oder kontinuierlich dem eigentlichen Kartonierprozess zugeführt. Die schiebenden bzw. vorlaufenden Zellenwinkel sind jeweils mit zwei Rollenketten verbunden und können dadurch manuell durch Relativverschiebung der Ketten auf die entsprechende Produktbreite eingestellt werden. Dadurch werden die Produkte durch jeweils ein Zellenwinkelpaar aufgenommen. Bei konventionellen Kartoniermaschinen ist als Träger für die Faltschachteln und zur Unterstützung des Aufrichtprozesses eine zur Produktkette parallelgeschaltete und synchron laufende sogenannte Faltschachtelkette vorgesehen. Üblicherweise werden bei Kartoniermaschinen zum Überschub der Produkte in die geöffnete Faltschachtel folgende Einschubsysteme verwendet: Bekannt ist ein Trommeleinschub mit umlaufenden Einschubelementen synchron zur Packgutkette. Die Einschubelemente haben einen fixen Teilungsabstand und werden wegabhängig über Weichen axial verschoben. Des Weiteren ist eine reversierende Linearbewegung mehrerer Einschubelemente mit alternierenden Synchronlauf- und Gegenlaufphasen parallel zur Produktkette bekannt. In einer dritten Möglichkeit werden servomotorisch angetriebene Zwei- bzw. Mehrzugsysteme mit gegenläufig antreibbaren Einschubelementen parallel zur Produktkette verwendet. Die vorbekannten Kartoniermaschinen haben insbesondere folgende Nachteile: Es werden stets mehrere Meter lange Produktketten benötigt, die einen signifikanten Kostenfaktor darstellen. Des Weiteren bedarf es einer manuellen Einstellung der Produktzellenwinkel auf die Packgutbreite. Ferner sind stets Einschubprobleme beim Überschub des Packgutes in die Faltschachtel möglich, da für eine prozesssichere Produktzuführung in die Produktkette ein relativ großes Spiel zwischen den Zellenwinkeln der Produktkette und dem Produkt erforderlich ist.

Aus der US 4,250,693 ist eine Vorrichtung zum Verpacken von Gütern unter kontinuierlicher Bewegung bekannt. Geöffnete, sich kontinuierlich bewegende Faltschachteln werden seitlich mit den entsprechenden Produkten befüllt und verschlossen.

Aus der EP 1 992 579 ist bereits eine gattungsgemäße Vorrichtung zum Verschieben von Gebinden gegenüber einer Transportbahn bekannt. Die Verschiebelemente sind um eine vorgegebene Schwenkachse schenkbar ausgebildet. Unterschiedliche Verschiebeelemente werden in ihrer Gesamtheit gegenüber einer Transportbahn auf zueinander unterschiedlichen Transportpfaden verschoben.

### Offenbarung der Erfindung

Die erfindungsgemäße Schiebeeinrichtung mit den Merkmalen des Anspruchs 1 ermöglicht im Gegensatz zu den vorbekannten Einrichtungen ein kosteneffizientes und sicheres Abschieben von Stückgut von einer Fördereinrichtung. Dabei erfolgt eine automatisierte Einstellung der gesamten Produktkette auf die Breite des Stückgutes. Es ist eine spielfreie Produktaufnahme möglich, wodurch ein prozesssicherer Abschub des Stückgutes bzw. ein prozesssicherer Überschub des Stückgutes in eine Faltschachtel möglich ist. Im Vergleich zu den herkömmlichen Einrichtungen weist die erfindungsgemäße Schiebeeinrichtung wesentlich geringere bewegte Massen auf. Es sind höhere Taktfrequenzen im Taktbetrieb möglich und es erfolgt ein schonungsvolles Produkthandling. All diese Vorteile werden erreicht durch eine Schiebeeinrichtung zum Abschieben von Stückgut von einer Fördereinrichtung, umfassend eine umlaufende Laufbahn und zumindest eine angetriebene, auf der Laufbahn verfahrbare Fahreinheit. Die Fahreinheit ist gegenüber der Laufbahn beweglich und kann an jede beliebige Stelle der Laufbahn verfahren werden. Die Fahreinheit umfasst ein Paddel und einen Schieber. Das Paddel und der Schieber sind fest auf einem Fahrgestell der Fahreinheit montiert und bewegen sich somit mit der gesamten Fahreinheit mit. Das Paddel ist zur Anlage an das auf der Fördereinrichtung ankommende Stückgut ausgebildet. Der Schieber ist senkrecht zur Fahrtrichtung der Fahreinheit verschiebbar. Dadurch kann mit dem Schieber das Stückgut von der Fördereinrichtung abgeschoben werden. Die Stückgüter können dabei intermittierend oder kontinuierlich mit der Fördereinrichtung zugeführt werden.

Insbesondere handelt es sich um eine lineare Fördereinrichtung, beispielsweise ein Förderband oder eine umlaufende Kette oder ein umlaufender Riemen.

Die Unteransprüche zeigen bevorzugte Weiterbildungen der Erfindung.

Es ist vorgesehen, dass die Fahreinheit mindestens einen Permanentmagneten umfasst und entlang der Laufbahn separat ansteuerbare Magnetspulen zum Antrieb der Fahreinheit angeordnet sind. Diese separat ansteuerbaren Magnetspulen erzeugen ein sogenanntes elektromagnetisches Wanderfeld und stellen einen Teil des Linearantriebs für die Fahreinheiten dar. Je nach Bestromung der Magnetspulen wird ein entsprechendes elektromagnetisches Feld erzeugt und eine magnetische Koppelung zwischen Magnetspule und Fahreinheit generiert. Dadurch kann die Fahreinheit an jeder beliebigen Stelle auf der Laufbahn positioniert werden. Insbesondere ist ein Positionserfassungssystem an der Schiebeeinrichtung vorgesehen, das die aktuelle Position der Fahreinheit auf der Laufschiene erfasst.

In besonders bevorzugter Ausführung ist das Paddel senkrecht zur Fahrtrichtung der Fahreinheit verschiebbar. Dadurch ist es möglich, die Schiebeeinrichtung direkt neben der Fördereinrichtung zu positionieren. Die Paddel werden dabei zwischen die Zellenwinkel auf der Fördereinrichtung eingeschleust. Hierzu werden die Paddel zunächst senkrecht zur Fahrtrichtung der Fahreinheit zurückgezogen und dann zwischen die Zellwinkel eingeschoben.

Insbesondere ist vorgesehen, dass auf der Laufbahn vorzugsweise mindestens zwei Fahreinheiten angeordnet sind. Dabei ist jede Fahreinheit separat ansteuerbar, so dass eine Position der Fahreinheit auf der Laufbahn und ein Abstand zwischen benachbarten Fahreinheiten veränderbar ist. Dies ist insbesondere durch das elektromagnetische Wanderfeld und das Positionserfassungssystem möglich.

Des Weiteren ist bevorzugt eine Erfassungseinheit zum Erfassen einer Position des ankommenden Stückgutes auf der Fördereinrichtung vorgesehen. Mittels dieser Erfassungseinheit erkennt die Schiebeeinrichtung die Position des ankommenden Stückgutes und kann eine der Fahreinheiten in Position bringen. Dabei wird die Fahreinheit derart in Position gebracht, dass das Paddel an einer Seite des Stückgutes anliegt.

Die Erfindung umfasst des Weiteren eine Transportanordnung mit einer Fördereinrichtung zum Transport von Stückgut und der soeben beschriebenen Schiebeeinrichtung. Die Fördereinrichtung umfasst zumindest einen Zellenwinkel. Insbesondere umfasst die Fördereinrichtung mehrere voneinander beabstandete Zellenwinkel, wobei jeweils zwischen zwei Zellenwinkeln eines der Stückgute angeordnet ist. Erfindungsgemäß muss jedoch der Abstand zwischen den Zellenwinkeln nicht mehr auf die Breite des Stückgutes angepasst werden. Das ankommende Stückgut liegt mit einer Seite an einem der Zellenwinkel an und die Fahreinheit wird derart gesteuert, dass das Paddel an der der ersten Seite gegenüberliegenden Seite des Stückgutes zur Anlage kommt. Dadurch ist eine gesicherte Position des Stückgutes festgelegt und der Schieber kann das Stückgut definiert abschieben.

Besonders bevorzugt ist vorgesehen, dass die Fahrtrichtung der Fahreinheit und die Bewegungsrichtung der Fördereinheit in zueinander parallelen Ebenen liegen. Die Laufbahn ist insbesondere oval ausgestaltet, wobei die beiden längeren Seiten des Ovals parallel zur Fördereinrichtung, insbesondere parallel zu einem Förderband, stehen.

Die im Rahmen der erfindungsgemäßen Schiebeeinrichtung beschriebenen vorteilhaften Ausgestaltungen und Unteransprüche finden entsprechend vorteilhafte Anwendung auf die erfindungsgemäße Transportanordnung.

Die Erfindung umfasst des Weiteren eine Verpackungsanordnung mit einer der soeben beschriebenen Transportanordnungen und einer Bereitstellungseinrichtung. Die Bereitstellungseinrichtung ist zum Bereitstellen einer Verpackung, insbesondere einer Faltschachtel, neben der Fördereinrichtung ausgebildet. Der Schieber ist zum Abschieben des Stückgutes von der Fördereinrichtung und zum gleichzeitigen Einschieben des Stückgutes in die Verpackung ausgebildet. Insbesondere handelt es sich bei der Verpackungsanordnung um eine Kartoniermaschine für die Verpackung von pharmazeutischen oder kosmetischen Erzeugnissen oder für Nahrungsmittel. Der eine Zellenwinkel auf der Fördereinrichtung und die Paddel der Fahreinheit definieren die genaue Position des Stückgutes, so dass über den Schieber das Stückgut exakt in die Verpackung eingeschoben werden kann.

Die im Rahmen der erfindungsgemäßen Schiebeeinrichtung und Transportanordnung beschriebenen vorteilhaften Ausgestaltungen und Unteransprüche finden entsprechend vorteilhafte Anwendung auf die erfindungsgemäße Verpackungsanordnung.

Die Erfindung umfasst des Weiteren ein Verfahren zum Abschieben von Stückgut von einer Fördereinrichtung. Das Verfahren umfasst die folgenden Schritte: (i) Erfassen einer Position des ankommenden Stückgutes auf der Fördereinrichtung, (ii) Verfahren einer Fahreinheit auf einer umlaufenden Laufbahn, so dass ein Paddel der Fahreinheit am Stückgut anliegt, und (iii) Abschieben des Stückgutes mit einem Schieber der Fahreinheit. Insbesondere ist vorgesehen, dass die Fahreinheit nach dem Anlegen des Paddels am Stückgut mit derselben Geschwindigkeit wie die Fördereinrichtung verfahren wird. Dadurch fährt die Fahreinheit synchron mit dem auf der Fördereinrichtung beförderten Stückgut. Bei einem Verpacken des Stückgutes wird parallel zur Fördereinrichtung eine offene Verpackung ebenfalls mit derselben Geschwindigkeit bewegt, so dass während des Fortbewegens des Stückgutes das Stückgut verpackt werden kann.

Die im Rahmen der erfindungsgemäßen Schiebeeinrichtung, Transportanordnung oder Verpackungsanordnung beschriebenen vorteilhaften Ausgestaltungen und Unteransprüche finden in entsprechender Weise vorteilhafte Anwendung auf das erfindungsgemäße Verfahren.

### Kurze Beschreibung der Zeichnungen

Nachfolgend wird ein Ausführungsbeispiel der Erfindung unter Bezugnahme auf die begleitende Zeichnung im Detail beschrieben. Dabei zeigt:
- Figur 1: eine erfindungsgemäße Transportanordnung gemäß einem Ausführungsbeispiel,
- Figur 2: eine erfindungsgemäße Schiebeeinrichtung der erfindungsgemäßen Transportanordnung gemäß dem Ausführungsbeispiel, und
- Figur 3: eine Fördereinrichtung der erfindungsgemäßen Transportanordnung gemäß dem Ausführungsbeispiel.

### Ausführungsform der Erfindung

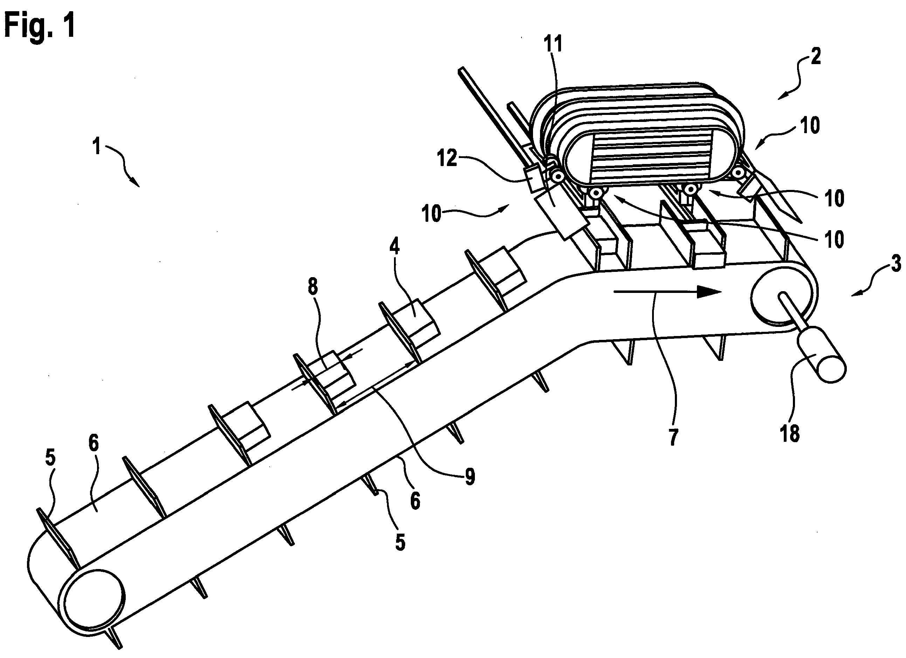

Figur 1 zeigt eine Transportanordnung 1 gemäß dem Ausführungsbeispiel. Die Transportanordnung 1 umfasst eine Schiebeeinrichtung 2 und eine Fördereinrichtung 3 zum Transport von Stückgut 4.

Die Fördereinrichtung 3 setzt sich zusammen aus einem Band 6 und mehreren von dem Band 6 senkrecht abstehenden Zellenwinkeln 5. Die Fördereinrichtung 3 wird in der eingezeichneten Bewegungsrichtung 7 umlaufend bewegt.

Jeweils zwischen zwei Zellenwinkeln 5 befindet sich ein Stückgut 4. Das Stückgut 4 liegt mit einer Seite an einem Zellenwinkel 5 an. Man spricht hier von einem schiebenden Zellenwinkel 5. Um ein sicheres Anliegen des Stückgutes 4 am schiebenden Zellenwinkel 5 zu gewährleisten, ist die Fördereinrichtung 3 teilweise um einen Winkel größer 0 Grad angestellt. Zur Unterstützung des Anlageprozesses kann bevorzugt an dem Band 6 über einen Servoantrieb eine Longitudinalschwingung mit entsprechend angepassten Beschleunigungsrampen aufgeprägt werden.

Figur 1 zeigt des Weiteren einen Abstand 9 zwischen zwei benachbarten Zellenwinkeln 5 und eine Länge 8 des Stückgutes 4. Erfindungsgemäß muss der Abstand 9 zwischen den Zellenwinkeln 5 nicht mehr eingestellt werden, da die Schiebeeinrichtung 2 flexibel auf die Länge 8 des Stückgutes 4 reagiert. So ist bevorzugt vorgesehen, dass der Abstand 9 größer ist als die Länge 8.

Die Schiebeeinrichtung 2 umfasst mehrere Fahreinheiten 10. Jede dieser Fahreinheiten 10 weist ein Paddel 11 und einen Schieber 12 auf. Die Schiebeeinrichtung 2 erkennt die Position bzw. Größe des ankommenden Stückgutes 4. Daraufhin wird eine Fahreinheit 10 derart verfahren, dass das Paddel 10 als vorlaufender Zellenwinkel am Stückgut 4 anliegt. Dadurch ist die Position des Stückgutes 4 definiert und über den Schieber 11 kann das Stückgut 4 von der Fördereinrichtung 3 abgeschoben werden. Insbesondere befindet sich neben der Fördereinrichtung 3 eine Bereitstellungseinrichtung, auf der sich eine Verpackung, insbesondere ein Karton, befindet. Dadurch wird mit dem Schieber 11 das Stückgut 4 direkt von der Fördereinrichtung 3 in die Verpackung geschoben.

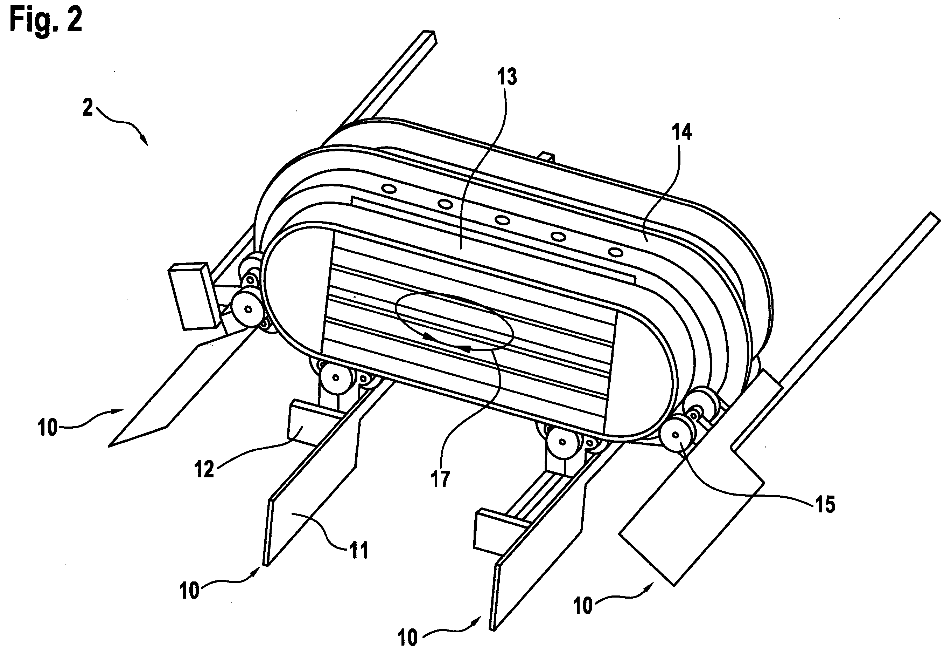

Figur 2 zeigt die Schiebeeinrichtung 1 im Detail. Gemäß dieser Darstellung umfasst die Schiebeeinrichtung 2 ein Grundgestell 13. Dieses Grundgestell 13 ist oval ausgebildet. Auf dem Grundgestell 13 befindet sich eine umlaufende Laufbahn 14, ausgebildet aus gestellfesten Führungsschienen. Die Laufbahn 14 stellt einen ovalen Fahrweg für die Fahreinheiten 10 dar. Die Fahreinheiten 10 weisen jeweils mehrere Laufrollen 15 auf. Über diese Laufrollen 15 sind die Fahreinheiten 10 auf der Laufbahn 14 geführt. Die Paddel 11 und Schieber 12 verfahren jeweils zusammen mit der jeweiligen Fahreinheit 10.

Somit können die Fahreinheiten 10 entlang der eingezeichneten Fahrrichtung 17 beliebig auf der Laufbahn 14 positioniert und verfahren werden. Insbesondere sind im Grundgestell 13 mehrere separat ansteuerbare Magnetspulen angeordnet. Über diese Magnetspulen ist ein sogenanntes elektromagnetisches Wanderfeld erzeugbar. Die Fahreinheiten 10 umfassen jeweils einen Permanentmagneten, so dass die Fahreinheiten 10 über dieses elektromagnetische Wanderfeld positionierbar und verfahrbar sind.

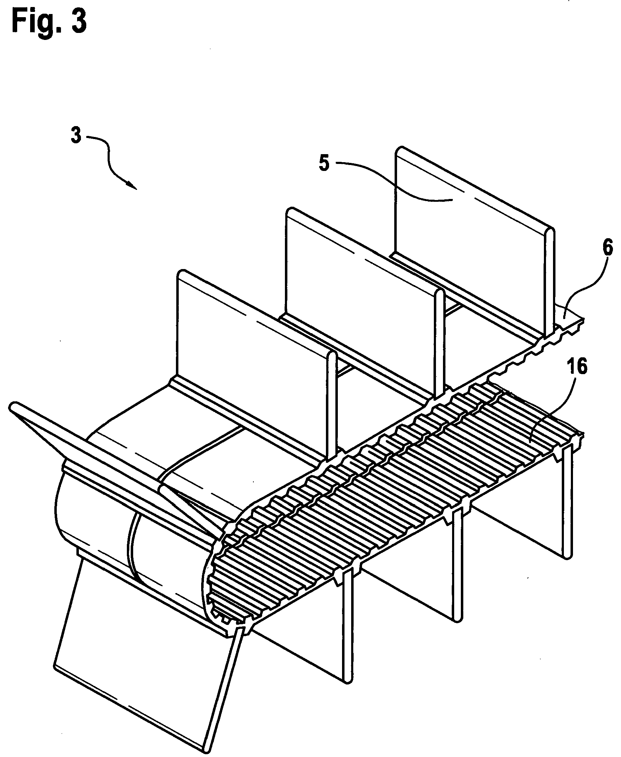

Figur 3 zeigt einen Ausschnitt der Fördereinrichtung 3 im Detail. Hier ist zu sehen, dass die einzelnen Zellwinkel 5 fest auf dem Band 6 befestigt sind. An der Innenseite des Bandes 6 ist eine Verzahnung 16 zum Antrieb der Fördereinrichtung 3 ausgebildet. Das Band 6 der Fördereinrichtung 3 weist insbesondere Montagenocken auf, zwischen die die Zellenwinkel 5 eingeschoben werden. Dadurch ergibt sich eine hoch belastbare und insbesondere biegesteife Kopplung zwischen den Zellenwinkeln 5 und dem Band 6 sowohl im Linear- als auch im Umlenkbereich.

Gemäß diesem Ausführungsbeispiel ist die Schiebeeinrichtung 2 als "Oberläufer" seitlich neben der Fördereinrichtung 3 angeordnet. Die Zellenwinkel 5 wirken lediglich schiebend auf das Stückgut 4. Beim Einlauf des Stückgutes 4 in den Arbeitsbereich der Schiebeeinrichtung 2 wird, beispielsweise beim Durchfahren einer Lichtschranke, ein Triggersignal für die Steuerung generiert. Daran anschließend erfolgt die Synchronisierung der Fahreinheiten 10 auf die vordere Kante des Stückgutes 4 und das Anlegen des Paddels an das Stückgut 4. Alternativ können die Fahreinheiten auch über einen Antrieb 18 des Förderbandes 6 synchronisiert werden. Bevorzugt ist der Antrieb 18 als Bandantrieb mit integriertem Winkelmesssystem ausgebildet. Unmittelbar daran anschließend kann das Stückgut 4 durch eine entsprechende Relativbewegung spielfrei zwischen dem schiebenden Zellenwinkel 5 und dem Paddel 11 aufgenommen werden. Damit sind die Voraussetzungen für das Abschieben mit dem Schieber 11 bzw. das Einschieben in eine Verpackung erfüllt.

Zum Ab- oder Überschieben sind die Schieber 12 vorgesehen. Diese Schieber 12 können passive Antriebselemente, z.B. Führungsweichen, aufweisen, um so relativ zum Rest der Fahreinheiten 10 senkrecht zur Fahrtrichtung 17 verschoben werden zu können. Allerdings ist es auch möglich, die Schieber 12 direkt mit Permanentmagneten auszustatten. Ferner benötigt es eines elektromagnetischen Wanderfeldes zur Bewegung dieser Permanentmagneten und der Schieber 12 senkrecht zur Fahrtrichtung 17.

## Patentansprüche

1. Schiebeeinrichtung (2) zum Abschieben von Stückgut (4) von einer Fördereinrichtung (3), umfassend
- eine umlaufende Laufbahn (14), und
- zumindest eine angetriebene, auf der Laufbahn (14) fahrbare Fahreinheit (10),
- wobei die Fahreinheit (10) ein Paddel (11) zur Anlage an das auf der Fördereinrichtung (3) ankommende Stückgut (4) umfasst, und
- wobei die Fahreinheit (10) einen senkrecht zur Fahrtrichtung (17) der Fahreinheit (10) verschiebbaren Schieber (12) zum Abschieben des Stückgutes (4) von der Fördereinrichtung (3) umfasst, **dadurch gekennzeichnet, dass** die Fahreinheit (10) zumindest einen Permanentmagneten umfasst und entlang der Laufbahn (14) separat ansteuerbare Magnetspulen zum Antrieb der Fahreinheit (10) angeordnet sind.

2. Schiebeeinrichtung nach Anspruch 1, **dadurch gekennzeichnet, dass** das Paddel (11) senkrecht zur Fahrtrichtung (17) der Fahreinheit (10) verschiebbar ist.

3. Schiebeeinrichtung nach einem der vorhergehenden Ansprüche, **gekennzeichnet durch** mehrere angetriebene, auf der Laufbahn (14) fahrbare Fahreinheiten (10), wobei jede Fahreinheit (10) separat ansteuerbar ist, sodass eine Position der Fahreinheit (10) auf der Laufbahn und ein Abstand zwischen benachbarten Fahreinheiten (10) veränderbar ist.

4. Schiebeeinrichtung nach einem der vorhergehenden Ansprüche, **gekennzeichnet durch** eine Erfassungseinheit zum Erfassen einer Position des ankommenden Stückgutes (4) auf der Fördereinrichtung (3).

5. Transportanordnung (1) umfassend eine Fördereinrichtung (3) zum Transport von Stückgut (4) und eine Schiebeeinrichtung (2) nach einem der vorhergehenden Ansprüche zum Abschieben des Stückgutes (4) von der Fördereinrichtung (3), wobei die Fördereinrichtung (3) zumindest einen Zellenwinkel (5) zur Anlage an einer ersten Seite des Stückgutes (4) umfasst, und das Paddel (11) zur Anlage an
einer zweiten, der ersten Seite gegenüberliegenden Seite des Stückgutes (4) ausgebildet ist.

6. Transportanordnung nach Anspruch 5, **dadurch gekennzeichnet, dass** die Fahrtrichtung (17) der Fahreinheit und die Bewegungsrichtung (7) der Fördereinrichtung (3) in zueinander parallelen Ebenen liegen.

7. Verpackungsanordnung umfassend eine Transportanordnung (1) nach einem der Ansprüche 5 oder 6 und eine Bereitstellungseinrichtung zum Bereitstellen einer Verpackung neben der Fördereinrichtung (3), wobei der Schieber (12) zum Abschieben des Stückgutes (4) von der Fördereinrichtung (3) und zum gleichzeitigen Einschieben des Stückgutes (4) in die Verpackung ausgebildet ist.

8. Verfahren zum Abschieben von Stückgut (4) von einer Fördereinrichtung (3), umfassend die folgenden Schritte
- Erfassen einer Position des ankommenden Stückgutes (4) auf der Fördereinrichtung (3),
- Verfahren einer Fahreinheit (10), die zumindest einen Permanentmagneten umfasst, auf einer umlaufenden Laufbahn (14), sodass ein Paddel (11) der Fahreinheit (10) am Stückgut (4) anliegt, indem entlang einer Laufbahn (14) angeordnete Magnetspulen zum Antrieb der Fahreinheit (10) separat angesteuert werden, und
- Abschieben des Stückgutes (4) mit einem Schieber (12) der Fahreinheit (10).

9. Verfahren nach Anspruch 8, **dadurch gekennzeichnet, dass** die Fahreinheit (10) nach dem Anlegen des Paddels (11) am Stückgut (4) mit derselben Geschwindigkeit wie die Fördereinrichtung (3) verfahren wird.

## Claims

1. Slide device (2) for sliding piece goods (4) off a conveying device (3), comprising
- a revolving track (14), and
- at least one driven mobile unit (10) which is capable of travelling on the track (14),
- wherein the mobile unit (10) comprises a paddle (11) for bearing on the piece goods (4) arriving on the conveying device (3), and
- wherein the mobile unit (10) comprises a slider (12) which for sliding off the piece goods (4) from the conveying device (3) is displaceable in manner perpendicular to the travelling direction (17) of the mobile unit (10),
**characterized in that** the mobile unit (10) comprises at least one permanent magnet, and that separately actuatable solenoids for driving the mobile unit (10) are disposed along the track (14).

2. Slide device according to Claim 1, **characterized in that** the paddle (11) is displaceable in a manner perpendicular to the travelling direction (17) of the mobile unit (10).

3. Slide device according to one of the preceding claims, **characterized by** a plurality of driven mobile units (10) which are capable of travelling on the track (14), wherein each mobile unit (10) is separately actuatable such that a position of the mobile unit (10) on the track and a spacing between adjacent mobile units (10) are variable.

4. Slide device according to one of the preceding claims, **characterized by** a detection unit for detecting a position of the arriving piece goods (4) on the conveying device (3).

5. Transport assembly (1) comprising a conveying device (3) for transporting piece goods (4) and a slide device (2) according to one of the preceding claims for sliding the piece goods (4) off the conveying device (3), wherein the conveying device (3) comprises at least one angular cell (5) for bearing on a first side of the piece goods (4), and the paddle (11) is configured so as to bear on a second side of the piece goods (4) that is opposite the first side.

6. Transport assembly according to Claim 5, **characterized in that** the travelling direction (17) of the mobile unit and the moving direction (7) of the conveying device (3) are in mutually parallel planes.

7. Packaging assembly comprising a transport assembly (1) according to one of Claims 5 or 6 and a provisioning device for providing a pack beside the conveying device (3), wherein the slide (12) is configured for sliding the piece goods (4) off the conveying device (3) and for simultaneously inserting the piece goods (4) into the pack.

8. Method for sliding piece goods (4) off a conveying device (3), the method comprising the following steps:
- detecting a position of the arriving piece goods (4) on the conveying device (3),
- moving a mobile unit (10), which comprises at least one permanent magnet, on a revolving track (14) such that a paddle (11) of the mobile unit (10) bears on the piece goods (4) in that solenoids which are disposed along a track (14) are separately actuated for driving the mobile unit (10), and
- sliding off the piece goods (4) by way of a slide of the mobile unit (10).

9. Method according to Claim 8, **characterized in that** the mobile unit (10), once the paddle (11) bears on the piece goods (4), is moved at the same speed as the conveying device (3).

## Revendications

1. Dispositif coulissant (2) pour décharger une marchandise (4) d'un dispositif de transport (3), comprenant
- une bande de roulement entraînée en boucle (14) et
- au moins une unité de transport entraînée, (10) déplaçable sur la bande de roulement (14),
- l'unité de transport (10) comprenant une pale (11) pour l'application contre la marchandise (4) arrivant sur le dispositif de transport (3) et
- l'unité de transport (10) comprenant un coulisseau (12) déplaçable perpendiculairement à la direction de transport (17) de l'unité de transport (10) pour décharger la marchandise (4) du dispositif de transport (3), **caractérisé en ce que** l'unité de transport (10) comprend au moins un aimant permanent, et des bobines magnétiques pouvant être commandées séparément sont disposées le long de la bande de roulement (14) pour entraîner l'unité de transport (10).

2. Dispositif coulissant selon la revendication 1, **caractérisé en ce que** la pale (11) peut être déplacée perpendiculairement à la direction de transport (17) de l'unité de transport (10).

3. Dispositif coulissant selon l'une quelconque des revendications précédentes, **caractérisé par** plusieurs unités de transport entraînées (10) déplaçables sur la bande de roulement (14), chaque unité de transport (10) pouvant être commandée séparément de telle sorte qu'une position de l'unité de transport (10) sur la bande de roulement et qu'une distance entre des unités de transport adjacentes (10) puissent être modifiées.

4. Dispositif coulissant selon l'une quelconque des revendications précédentes, **caractérisé par** une unité de détection pour détecter une position de la marchandise arrivant (4) sur le dispositif de transport (3).

5. Système de transport (1) comprenant un dispositif de transport (3) pour transporter une marchandise (4) et un dispositif coulissant (2) selon l'une quelconque des revendications précédentes pour décharger la marchandise (4) depuis le dispositif de transport (3), le dispositif de transport (3) comprenant au moins une équerre de délimitation de cellule (5) pour l'application contre un premier côté de la marchandise (4), et la pale (11) étant réalisée de manière à s'appliquer contre un deuxième côté de la marchandise (4) opposé au premier côté.

6. Système de transport selon la revendication 5, **caractérisé en ce que** la direction de transport (17) de l'unité de transport et la direction de déplacement (7) du dispositif de transport (3) sont situées dans des plans parallèles l'un à l'autre.

7. Système d'emballage comprenant un système de transport (1) selon l'une quelconque des revendications 5 ou 6, et un dispositif de fourniture pour fournir un emballage à côté du dispositif de transport (3), le coulisseau (12) étant réalisé pour décharger la marchandise (4) du dispositif de transport (3) et pour introduire simultanément la marchandise (4) dans l'emballage.

8. Procédé pour décharger une marchandise (4) d'un dispositif de transport (3), comprenant les étapes suivantes :
- détection d'une position de la marchandise arrivant (4) sur le dispositif de transport (3),
- déplacement d'une unité de transport (10) qui comprend au moins un aimant permanent, sur une bande de roulement entraînée en boucle (14), de sorte qu'une pale (11) de l'unité de transport (10) s'applique contre la marchandise (4), par le fait que des bobines magnétiques disposées le long d'une bande de roulement (14) sont commandées séparément pour l'entraînement de l'unité de transport (10), et
- déchargement de la marchandise (4) avec un coulisseau (12) de l'unité de transport (10).

9. Procédé selon la revendication 8, **caractérisé en ce que** l'unité de transport (10) est déplacée après l'application de la pale (11) contre la marchandise (4) avec la même vitesse que le dispositif de transport (3).
